Europäisches Patentamt

European Patent Office

Office européen des brevets

(19)

(11) Veröffentlichungsnummer: **0 073 017**
**B1**

(12) **EUROPÄISCHE PATENTSCHRIFT**

(45) Veröffentlichungstag der Patentschrift:
11.06.86

(51) Int. Cl.⁴: **G 01 N 27/82, G 01 N 27/87**

(21) Anmeldenummer: 82107541.3

(22) Anmeldetag: 18.08.82

(54) Vorrichtung zur zerstörungsfreien Prüfung ferromagnetischer Körper.

(30) Priorität: 19.08.81 DE 3132808

(43) Veröffentlichungstag der Anmeldung:
02.03.83 Patentblatt 83/9

(45) Bekanntmachung des Hinweises auf die Patenterteilung:
11.06.86 Patentblatt 86/24

(84) Benannte Vertragsstaaten:
DE FR IT SE

(56) Entgegenhaltungen:
DE - A - 2 905 399
DE - B - 1 573 837
DE - B - 2 607 783

(73) Patentinhaber: Nukem GmbH, Rodenbacher
Chaussee 6 Postfach 11 00 80, D-6450 Hanau 11 (DE)

(72) Erfinder: Hüschelrath, Gerhard, Dr., Am Klingergraben 7,
D-8752 Laufach (DE)
Erfinder: Lein, Wilfried, Vor der Pulvermühle 10,
D-6450 Hanau/Main 11 (DE)

(74) Vertreter: Stoffregen, Hans-Herbert, Dr. Dipl.-Phys. et al,
Patentanwälte Strasse & Stoffregen Salzstrasse 11a
Postfach 2144, D-6450 Hanau/Main 1 (DE)

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

LIBER, STOCKHOLM 1986

## Beschreibung

Die Erfindung bezieht sich auf eine Vorrichtung zur zerstörungsfreien Prüfung langgestreckter, längs ihrer Achse verschiebbarer, ferromagnetischer Körper auf Gefügestörungen gemäß Oberbegriff des Anspruchs 1.

Es ist bekannt, zur Prüfung ferromagnetischer Werkstoffe auf Risse, Lunker und Löcher die Werkstücke bis in die Sättigung zu magnetisieren. Bei Störungen im Werkstoffgefüge bilden sich Streuflüsse aus, die an den Störstellen teilweise außerhalb der Werkstoffoberfläche verlaufen. Die Streuflüsse werden mit Magnetfelddetektoren festgestellt. Die Magnetfelddetektoren ermöglichen die Lokalisierung der Gefügestörungen. Als Magnetfelddetektoren werden Spulen, Feldplatten, Hallgeneratoren oder magnetisches Pulver verwendet.

Eine Vorrichtung der eingangs beschriebenen Art ist der DE-B-26 07 783 zu entnehmen. Dabei wird ein um ein prüfendes Rohr rotierender bzw. zu diesem oszillierender Prüfkopf benutzt. Zwei Gruppen Meßsonden sind in Bezug auf das Werkstück diametral zueinander angeordnet und erstrecken sich entlang seiner Längsachse. Eine solche Vorrichtung ist konstruktiv aufwendig und läßt aufgrund der Magnet-Sondenanordnung die Erfassung sämtlicher Fehler nicht zu.

Prüfeinrichtungen für Werkstücke mit komplizierter Gestalt sind mit Handjochmagneten ausgerüstet, durch die Magnetpulver auf der Werkstückoberfläche ausgerichtet wird. Für Werkstücke mit einfachem Aufbau, zum Beispiel für Rohre, werden Elektro- oder Permanentmagnete eingesetzt, die in den rotierenden Werkstücken ein Magnetfeld erzeugen. Neben der Werkstückoberfläche, ungefähr in der Mitte zwischen den beiden Magnetpolen, befindet sich ein Paar von Magnetfelddetektoren, die an eine Auswerteinrichtung angeschlossen sind. Damit lassen sich die in Richtung der Rotationsachse verlaufenden Materialfehler beim Passieren der Magnetfeldsonden feststellen. Quer zur Rotationsachse sich erstreckende Fehler können allerdings nicht mit einer solchen Vorrichtung erfaßt werden. Für die Querfehlerfeststellung müssen zusätzliche Prüfvorrichtungen vorgesehen werden, mit denen die Werkstücke in Längsrichtung magnetisiert werden. Ein Kranz von Magnetfeldsonden schließt einen Durchlaß für die Werkstücke ein. Die Werkstücke werden in Achsrichtung durch den Kranz hindurchbewegt. Dabei stellen die Magnetfeldsonden Querfehler fest. Es ist auch möglich, die Werkstücke nicht drehbar anzuordnen und die Magnete und Sonden um die Werkstücke herum drehbeweglich auszubilden.

In nicht drehbar gelagerten Werkstücken können magnetische Drehfelder von nach Art von Elektromotorenständern ausgebildeten Vorrichtungen erzeugt werden. Damit läßt sich der Aufwand und die Energie für das Rotieren großer Massen einsparen. Lediglich die Magnetfeldsonden müssen synchron mit dem Drehfeld um das Werkstück herumbewegt werden.

Wenn die Prüflinge und die Magnetfelder relativ zueinander Rotationsbewegungen ausführen, entstehen in den Prüflingen Wirbelströme. Diese Wirbelströme bewirken durch Feldverdrängung eine Schwächung des Magnetfelds im Innern. Deshalb werden die Meßwertamplituden von im Inneren liegenden Fehlern geschwächt. Um Fehler im Inneren hinreichend genau feststellen zu können, dürfen die relativen Rotationsbewegungen zwischen Magnetfeld und Prüfling wenige hundert Umdrehungen pro Minute nicht übersteigen. Bei einer vollständigen Prüfung der Werkstücke ergeben sich daher lange Prüfdauern. Zwar kann die Prüfdauer durch parallel angeordnete Magnetfeldsonden verkürzt werden, jedoch lassen sich die Sondenanordnungen nicht beliebig lang ausbilden. Eine Grenze für die Länge der Sondenanordnungen liegt bei 200 mm. Ein längerer Prüflingsabschnitt kann nämlich nur mit unverhältnismäßig hohem Aufwand magnetisiert werden, da die auf den Prüfling zu übertragende Energie sehr hoch wird. Außerdem sind von derartigen Sondenanordnungen gleichzeitig zahlreiche Meßwerte auszuwerten.

Für die zerstörungsfreie Prüfung schmaler Rohrzonen, zum Beispiel von Schweißnähten, werden Vorrichtungen mit stationären Polschuhen, die die Prüfzonen magnetisieren, und lokal angeordneten, tangential zur Oberfläche rotierenden Magnetfeldsonden eingesetzt. Weil diese Sonden in einer Ebene bewegt werden, ändern sich ständig die Abstände zur Prüflingsoberfläche. Da die Meßempfindlichkeit stark vom Abstand zwischen Prüflingsoberfläche und Magnetfeldsonden abhängig ist, können mit einer derartigen Vorrichtung nur sehr schmale Zonen mit der gewünschten Meßgenauigkeit geprüft werden. Bei Schweißnähten sind diese Voraussetzungen erfüllt. Es ist allerdings erforderlich, die Schweißnähte gegenüber den Magnetfeldsonden genau zu führen. Dies ist selbst mit großem Aufwand nicht 100 %ig möglich.

Der Erfindung liegt die Aufgabe zugrunde, eine Vorrichtung der eingangs erläuterten Gattung derart weiterzuentwickeln, daß bei hoher Meßgenauigkeit und kurzer Prüfdauer eine Prüfung der ferromagnetischen Körper ohne rotierende bzw. oszillierende Magnete oder rotierende bzw. oszillierende Magnetfeldsonden möglich ist.

Die Aufgabe wird erfindungsgemäß dadurch gelöst, daß die Richtung des ersten Magnetfeldes mit einer vorgegebenen Querachse des Körpers zusammenfällt, mindestens ein zweites Paar von Magnetpolschuhen im Abstand von dem ersten Paar und ebenfalls symmetrisch bezüglich der Körperlängsachse vorgesehen ist, das ein zweites Magnetfeld erzeugt, dessen Richtung mit der Richtung des ersten Magnetfeldes einen Winkel einschließt, der dem Quotienten aus einhundertachtzig Grad und der Zahl der Magnetfelder entspricht, pro Paar von Magnetpolschuhen mindestens eine Reihe von Magnetfelddetektoren vorgesehen ist, die zwischen den Magnetpolschuhen des jeweils zugehörigen Paares längs des Magnetfeldes dieses Paares in einer Zone ortsfest angeordnet sind, die einem zu prüfenden Körperabschnitt senkrecht zur Verschieberichtung des Körpers entspricht, und in der Auswerteschaltung ein Multiplexer vorgesehen ist, der die Signale von den Magnetfelddetektoren über Verstärker erhält und die zeitliche Reihenfolge der Auswertung dieser Signale

2

festlegt.

Bei stationär erzeugten Magnetfeldern und feststehenden Magnetfeldsonden wird bei dieser Prüfvorrichtung der Prüfkörper in Längsrichtung bewegt. Es ist zwar noch eine Relativgeschwindigkeit zwischen Prüfkörper und Magnetfeld vorhanden, jedoch ist diese Relativgeschwindigkeit nur in axialer Richtung vorhanden. Bei sich drehenden Prüfkörpern oder sich drehenden Magnetpolen treten auch relative Geschwindigkeiten an quer zur Rohrlängsachse zwischen der Prüfkörperoberfläche und dem Magnetfeld auf. Infolgedessen ist die Beeinflussung der Meßgenauigkeit durch induzierte Wirbelströme bei der vorstehend erläuterten Vorrichtung nicht vorhanden, da keine Ummagnetisierung auftritt. Deshalb kann die Geschwindigkeit der länglichen Prüfkörper in Achsrichtung erhöht werden. Diese Maßnahme vermindert die Prüfdauer. Die Kosten je Prüfkörper lassen sich somit bei der zerstörungsfreien Prüfung wesentlich vermindern. Die zeitmultiplexe Auswertung der Ausgangssignale der Magnetfeldsonden kann so schnell durchgeführt werden, daß auch bei hoher Längsgeschwindigkeit der Prüfkörper sehr kleine Oberflächenzonen auf Fehler geprüft werden.

Bei einer bevorzugten Ausführungsform sind die Magnetfelddetektoren Hallgeneratoren, denen Steuerströme als Impulsfolgen zuführbar sind, mit denen eine zeitmultiplexe Abfrage der Hallgeneratoren synchronisiert ist.

Durch diesen Impulsbetrieb der Hallgeneratoren werden die Parameter verbessert. Es tritt eine Steigerung der Empfindlichkeit ein. Daher können sogar solche Hallgeneratoren, die normalerweise nur als Positionssensoren benutzt werden, zur Messung der Unterschiede der Magnetfeldpegel an den verschiedenen Stellen zwischen zwei zusammengehörigen Magnetpolen verwendet werden. Mit diesen Hallgeneratoren können Fehlersignale in der Größenordnung von 50 Gauß festgestellt werden. Die von den Polen erzeugten statischen Felder können dabei bis zu 1 kGauß stark sein.

Ausgestaltungen der Erfindung ergeben sich aus den Unteransprüchen.

Aus der folgenden Beschreibung von zeichnerisch dargestellten Ausführungsbeispielen wird die Erfindung näher erläutert.

Es zeigen:

Fig. 1 eine perspektivische Ansicht einer Vorrichtung zur zerstörungsfreien Prüfung ferrogmagnetischer Körper,

Fig. 2 die in Fig. 1 dargestellte Anordnung in einer Ansicht von vorne,

Fig. 3 Einzelheiten der in Fig. 1 dargestellten Reihen aus Magnetfelddetektoren in einer Ansicht von vorne,

Fig. 4 eine Ausführungsform einer Reihe mit anderer Anordnung der Magnetfelddetektoren in einer Ansicht von vorne,

Fig. 5 die in Fig. 2 dargestellte Reihe im Querschnitt,

Fig. 6 die in Fig. 3 dargestellte Reihe im Querschnitt,

Fig. 7 ein Blockschaltbild einer mit Magnetfelddetektoren verbundenen Auswerteschaltung,

Fig. 8 Diagramme der von den Hallgeneratoren in einer Reihe in Abhängigkeit von der Lage in der Reihe erzeugten Hallspannungen,

Fig. 9 ein Blockschaltbild eines Suchfilters.

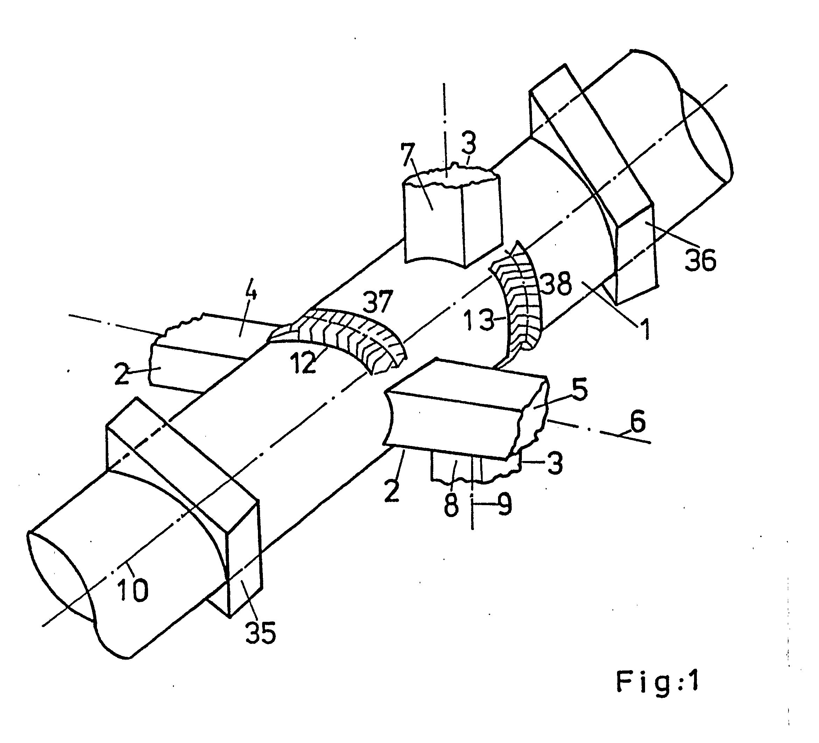

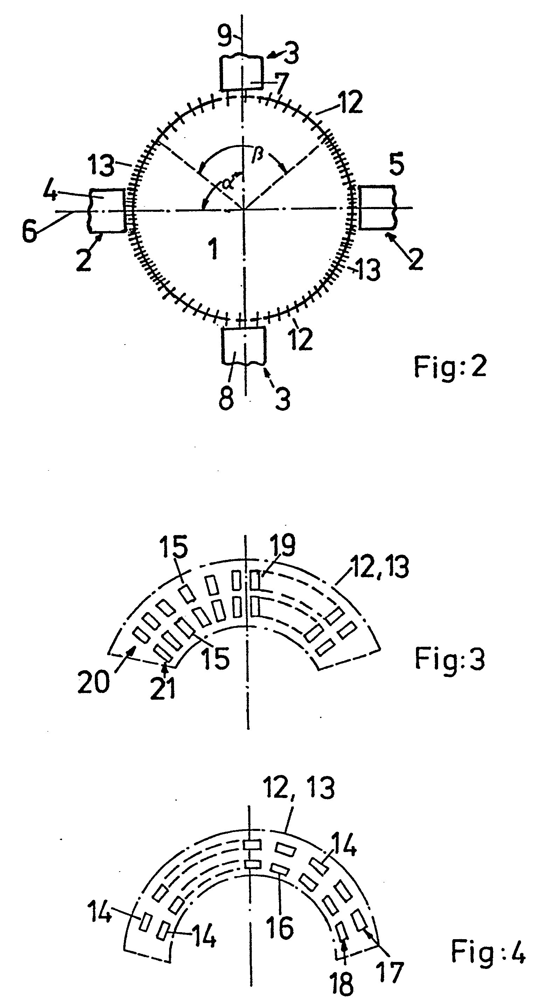

Eine Vorrichtung zur zerstörungsfreien Prüfung ferromagnetischer Rohre 1, von denen in Fig. 1 und 2 eines dargestellt ist, enthält ein Magnetisierungssystem aus zwei Magnetpaaren 2, 3, die in Längsrichtung des Rohres 1 hintereinander angeordnet sind. Das Magnetpaar 2 enthält einen ersten Magnetpolschuh 4, dessen dem Rohr zugewandtes Ende beispielsweise ein magnetischer Nordpol ist, und einen zweiten Magnetpolschuh 5, der an seinem dem Rohr 1 zugewandten Ende einen Magnetpol hat, der demjenigen des ersten Polschuhs 4 entgegengesetzt ist. Die Magnetpolschuhe 4, 5 sind längs der gleichen Mittelachse 6 angeordnet. Das Magnetpaar 3 besteht aus ebenfalls zwei Magnetpolschuhen 7,8, wobei der Polschuh 7 an seiner dem Rohr 1 zugewandten Stirnfläche einen magnetischen Nordpol und der Polschuh 8 an seiner dem Rohr 1 benachbarten Stirnseite einen magnetischen Südpol hat. Auch die Magnetpolschuhe 7, 8 sind längs einer gemeinsamen Mittelachse 9 angeordnet. Während die Magnetpaare 2 und 3 stationär befestigt sind, wird das Rohr 1 während der Prüfung in Richtung seiner Längsachse 10 zwischen den Magnetpolschuhen 4, 5, 7 und 8 hindurchbewegt. Durch die Magnetpolschuhe 4, 5, 7 und 8 werden zwei Magnetfelder auf das Rohr 1 gerichtet. Die Mittelachsen dieser Magnetfelder stimmen jeweils mit den Mittelachsen 6 und 9 der Magnetpolschuhe 4, 5 bzw. 7, 8 überein. Die Mittelachsen 6 und 9 sind unter einem Winkel gegeneinander geneigt, der dem Quotienten aus einhundertundachtzig Grad und der Zahl der auf das Rohr 1 gerichteten Magnetfelder entspricht. Da auf das Rohr 1 zwei Magnetfelder gerichtet sind, ist der Winkel α neunzig Grad. Die Feldlinien der Magnetfelder verlaufen im Innern des Rohres überwiegend in den Rohrwänden. Die Magnetfelder sind so stark bemessen, daß die Rohrwände magnetisch gesättigt sind.

Durch Risse, Lunker oder Löcher in den Rohrwänden wird der magnetische Widerstand stark erhöht. Ein Teil des Magnetfelds schließt sich nicht über die Risse, Lunker oder Löcher, sondern über die Luftstrecke außerhalb der äußeren bzw. inneren Rohroberfläche. Dieser Teil des Magnetfelds wird von Magnetfelddetektoren erfaßt. Die Messung eines derartigen außerhalb der Rohroberfläche verlaufenden Felds zeigt somit einen Materialfehler bzw. eine Gefügestörung in den Wänden des Rohres 1 an.

Zwischen den die Magnetfelder auf das Rohr 1 richtenden Polschuhen 4, 5 bzw. 7, 8 sind Reihen 12 bzw. 13 von Magnetfelddetektoren entlang der Oberfläche des Rohres 1 angeordnet. Die Reihen 12, 13 befinden sich in geringem Abstand von der Oberfläche des Rohres 1. In Fig. 1 und 2 sind die Reihen 12 und 13 nahe an den Außenwänden des Rohres 1 angeordnet. Es können auch Reihen von Magnetfelddetektoren im Inneren des Rohres 1 angeordnet sein, die sich entlang der inneren Oberfläche erstrecken.

Die Reihen 12, 13 erfassen in dem Rohr 1 eine Prüfzone, die sich in Achsrichtung 10 erstreckt und eine Breite

3

hat, die der Länge der jeweiligen Reihe 12 bzw. 13 entspricht. Die Reihen 12, 13 sind ebenso wie die Magnetpaare 2, 3 stationär angeordnet. Die beiden Reihen 12 und die beiden Reihen 13 erfassen auf der Oberfläche des Rohres 1 jeweils zwei Zonen, die je einen Winkel β einschließen, der sich aus einhundertundachtzig Grad dividiert durch die Anzahl der Magnetpole ergibt. Jede einzelne Reihe 12, 13 schließt mindestens diesen Winkel von 45° ein. Die Reihen 12, 13 können auch länger ausgebildet sein, so daß sich ein Winkel β ergibt, der größer als 45° ist. Mit der in Fig. 1 und 2 gezeigten Größe der Reihen 12 und 13 läßt sich das Rohr 1 über den gesamten Umfang prüfen.

Falls eine Prüfvorrichtung benötigt wird, mit der Rohr 1 nicht über den gesamten Umfang, sondern nur über einen Teil des Umfangs, der zum Beispiel der Breite einer Schweißnaht entspricht, geprüft werden soll, kann eine Reihe von Magnetfelddetektoren vorgesehen werden, die nur die Breite des gewünschten Umfangsteils hat. Hierbei kann die Verwendung nur eines Magnetpaares ausreichen. Die in den Fig. 1 und 2 dargestellte Prüfvorrichtung läßt sich schaltungsmäßig so betreiben, daß nicht nur der gesamte Umfang, sondern auch nur ein Umfangsteil geprüft werden kann. Dies wird im folgenden noch näher erläutert.

Als Magnetfelddetektoren sind in den Reihen 12, 13 Hallgeneratoren vorgesehen, denen als Steuerströme Impulsfolgen zugeführt werden. Die Ausgänge der Hallgeneratoren werden im Zeitmultiplex an eine nachstehend noch beschriebene Auswerteschaltung gelegt. Die zeitmultiplexe Abfrage der Hallgeneratoren ist mit den Impulsfolgen der Steuerströme synchronisiert. Als Hallgeneratoren können solche der Type KSY 10 der Fa. Siemens verwendet werden.

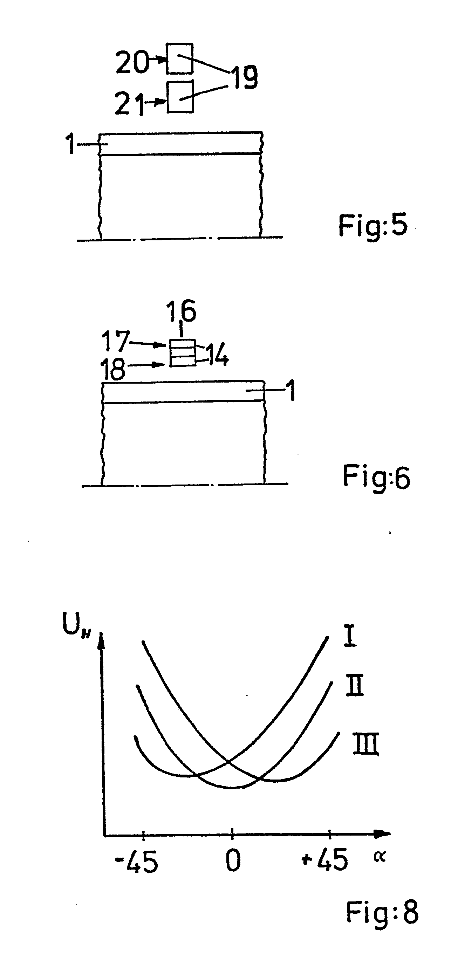

In den Reihen 12, 13 können Hallgeneratoren 14, 15 in unterschiedlicher Ausrichtung zur Oberfläche des Rohres 1 angeordnet sein. In Fig. 4 und Fig. 6 sind Hallgeneratoren 14 dargestellt, die mit ihren Breitseiten 16 auf die Oberfläche des Rohres 1 ausgerichtet sind. Es befinden sich zwei Lagen 17, 18 von Hallgeneratoren übereinander. Welche Lage 17, 18 von Hallgeneratoren 14 für die Fehlerprüfung verwendet wird, hängt von der Art der Prüfung ab. Die höchste Empfindlichkeit für die Fehlerfeststellung ergibt sich bei der Differenzschaltung von in den Lagen 17 und 18 benachbarter Hallgeneratoren.

Die Hallgeneratoren 15 sind bei der in Fig. 3 und 5 gezeigten Ausführungsform mit ihren Breitseiten 19 senkrecht zum gegenüberliegenden Oberflächenelement des Rohres 1 angeordnet. Die Hallgeneratoren 15 sind in zwei Lagen 20, 21 übereinander angebracht. Die Verwendung der jeweiligen Lage 20, 21 für die Fehlerprüfung hängt ebenso wie bei der in Fig. 4 dargestellten Anordnung von Auswahlkriterien der Fehler ab. Die Ausbildung gemäß Fig. 3 läßt eine dichte Packung von Hallgeneratoren 15 nebeneinander zu. Damit können Fehler im Gefüge des Rohres 1 besser lokalisiert werden.

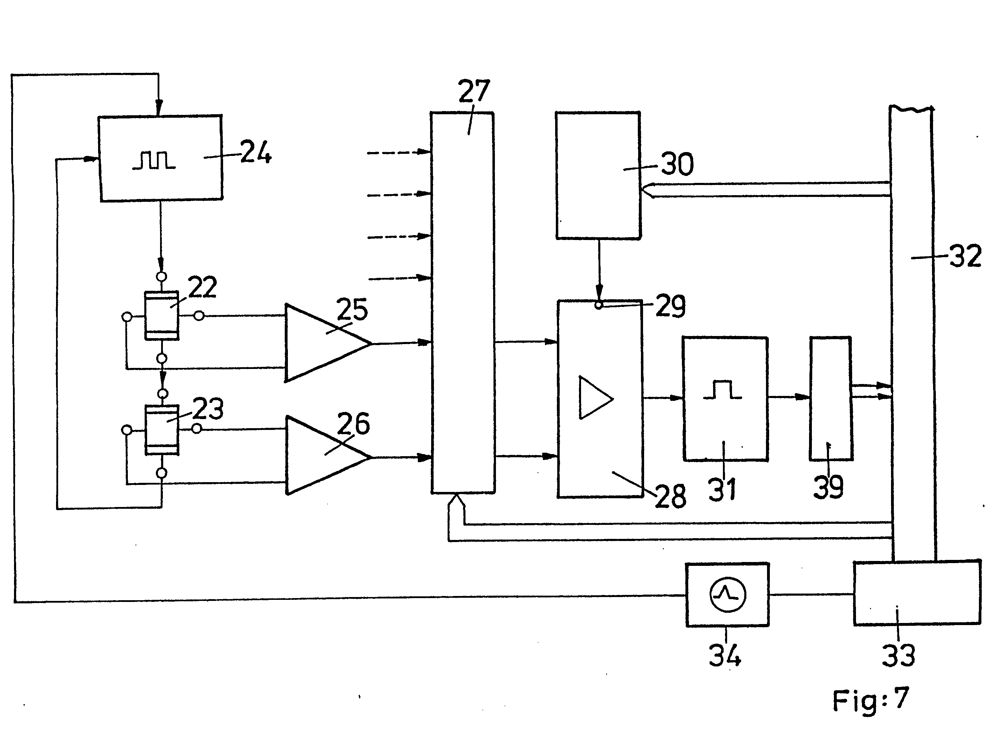

In Fig. 7 sind zwei Hallgeneratoren 22, 23 mit ihren Anschlußelektroden dargestellt. Die Reihen 12, 13 werden aus Hallgeneratoren der Anordnungsart 14, 15 gebildet. Die Art der Schaltung aller benachbarte Paare bildende Hallgeneratoren 14, 15 in einer der Lagen 17, 18 oder 20, 21 entspricht derjenigen der beiden Hallgeneratoren 22, 23.

Die Zuführelektroden für den Steuerstrom sind bei den Hallgeneratoren 22, 23 in Reihe geschaltet. Ein Konstantstromgenerator 24 speist die Zuführelektroden für den Steuerstrom. Die Elektroden zur Abnahme der Hallspannung sind bei den Hallgeneratoren 22, 23 jeweils an einen Eingang eines Verstärkers 25, 26 gelegt.

Der Konstantstromgenerator 24 erzeugt eine Impulsfolge mit einem Impulspausen-zu-Impulsdauerverhältnis von 10:1. Durch die Impulsbeaufschlagung der Hallgeneratoren 22, 23 wird die thermische Beanspruchung vermindert. Deshalb können höhere Steuerstromamplituden angewendet werden. Da die Hallspannung den Steuerströmen proportional ist, ergeben sich auch bei kleinen Magnetfeldern ausreichend hohe Hallspannungen. Es tritt eine Steigerung der Genauigkeit der Hallgeneratoren 22, 23 ein. Deshalb können als Hallgeneratoren 22, 23 preisgünstige Sensoren, zum Beispiel die Typen KSY 10, eingesetzt werden, die üblicherweise zur Positionserfassung von Magneten benutzt werden. Die impulsweise Beaufschlagung der Hallgeneratoren 22, 23 mit Steuerströmen erlaubt auch die Überwachung ausgewählter Werte in den Impulspausen. So ist es möglich, in den Impulspausen die temperaturabhängige Nullpunktkonstanz der Hallgeneratoren 22, 23 festzustellen und den Temperaturwerten entsprechende Korrekturgrößen zu bestimmen, mit denen die Meßwerte zur Beseitigung des Einflusses von Temperaturveränderungen korrigiert werden.

Die Ausgänge der Verstärker 25, 26 sind mit Eingängen eines Multiplexers 27 verbunden, an den auch die von den anderen Hallgeneratoren 14 bzw. 15 gespeisten Verstärker angeschlossen sind, die nicht näher dargestellt sind. Der Multiplexer 27 steht mit seinen Ausgängen, auf denen die von den Verstärkern 25, 26 oder den anderen nicht dargestellten Verstärkern abgegebenen analogen Signale übertragen werden, mit zwei Eingängen eines Kompensationsverstärkers 28 in Verbindung. Der Kompensationsverstärker 28 hat Eingänge 29 für die Beaufschlagung mit Kompensationsgrößen. Als Kompensationsverstärker 28 kann z.B. ein oder mehrere Operationsverstärker der Type Harris 2525 verwendet werden. Die Eingänge 29 werden von den Ausgängen eines Registers 30 gespeist, in dem die digitalen Kompensationsgrößen für die Dauer der Kompensation der Signale im Kompensationsverstärker 28 zwischengespeichert werden. Das Register 30 ist ferner mit einem nicht bezeichneten Digital-Analog-Umsetzer ausgestattet, beispielsweise einer von der Fa. Datel unter der Type DAC 12 HA hergestellten Einheit. Der Ausgang dieses Umsetzers speist- die Eingänge. Durch die Kompensation werden die von den Hallgeneratoren 22, 23 erzeugten Signale von störenden statischen Signalanteilen befreit. Weiterhin bildet der Kompensationsverstärker 28 in einer entsprechenden Schaltung die Differenz der Signale der Hallgeneratoren. Das Ergebnis dieser Differenzbildung ist ein dem Gradienten der Magnetfeldstärke an der Stelle der Hallgeneratoren 22, 23 entsprechendes Signal, das um den durch das Referenzsignal abgebildeten, lokalen Gleichfeldanteil vermindert ist. Die Differenz der Signale wird weiterhin verstärkt und einem an den Kompensationsverstärker 28 angeschlossenen Suchfilter (Matched-Filter) 31 zugeführt. Das Suchfilter 31 hat eine an die Form der Nutzsignale der Hallgeneratoren 22, 23 angepaßte Kennlinie, durch die Störsignale stärker unterdrückt werden. Mit einem solchen Suchfilter läßt sich das Signal-zu-Rauschverhältnis um einen Faktor zwischen 10 und 20 verbessern. An das Suchfilter 31 ist eine Analog-Digital-Umsetzeinheit 39 angeschlossen. Mit der Umsetzeinheit 39 werden digitale Signale erzeugt, die den Hallspannungsdifferenzen der Generatoren 22, 23, vermindert um den lokalen Gleichfeldanteil, entsprechen. Die digitalen Signale weisen mehrere binäre oder binär codierte Stellen auf. Die Ausgänge der Umsetzeinheit sind an einen Bus 32 gelegt. Mit dem Bus 32 sind auch die Eingänge des Registers 30 verbunden. Weiterhin stehen mit dem Bus 32 die Steuereingänge des Multiplexers 27 in Verbindung. Der Bus 32 hat vorzugsweise gesonderte Adress- und Datenleitungen.

An den Bus 32 ist weiterhin ein Prozessor 33 angeschlossen, durch den die Adressenvorgabe und der Datentransfer auf dem Bus 32 gesteuert werden. Dem Prozessor 33 ist eine Triggeranordnung 34 nachgeschältet, die mit dem Konstantstromgenerator 24 verbunden ist. Die Triggeranordnung 34 synchronisiert die Steuerstromimpulse des Konstantstromgenerators nach Maßgabe durch den Prozessor 33.

Die Hallgeneratoren 14, 15 in den Reihen 12, 13 werden in der durch ihre Lage in den Reihen 12, 13 gegebenen Aufeinanderfolge nacheinander über den vom Prozessor 33 gesteuerten Multiplexer 27 an den Kompensationsverstärker 28 gelegt. Durch diese elektronische Abfrage der Hallgeneratoren 14, 15 wird die Rotation einer Magnetfeldsonde elektronisch simuliert. Die aufeinanderfolgende Abfrage der Hallgeneratoren 14, 15 kann durch die Verwendung kontaktloser Schaltelemente sehr schnell erfolgen. Damit wird eine "Rotationsgeschwindigkeit" simuliert, die wesentlich größer als die mit mechanischen Mitteln wirtschaftlich erzielbaren Geschwindigkeiten drehbarer Magnetfeldsonden ist.

Die Auswahl und die Reihenfolge der Hallgeneratoren 14, 15 läßt sich über eine entsprechende Adressierung des Multiplexers 27 beliebig ändern. Damit kann die in Fig. 7 im Blockschaltbild gezeigte Vorrichtung an unterschiedliche Prüfbedingungen angepaßt werden. Wenn beispielsweise nur kleine Rohrbereiche geprüft werden sollen, kann die Abfrage auf die diesem Rohrbereich gegenüberliegenden Hallgeneratoren 14, 15 beschränkt werden. Darüberhinaus ist es möglich, kritische Rohrbereiche durch eine schnellere Adressierung des Multiplexers häufiger abzufragen als andere Rohrbereiche. Die Vorrichtung ist daher universeller als die eingangs beschriebenen Prüfvorrichtungen verwendbar.

Die Reihen 12, 13 der Magnetfeldsonden können auch länglichen Körpern mit nicht rundem Querschnitt angepaßt werden, während die eingangs erläuterten Prüfvorrichtungen mit rotierenden Magneten oder Magnetfeldsonden nur für Körper mit runden Querschnitten geeignet sind.

Wenn die Vorrichtung nur für die Prüfung schmaler Rohrbereiche verwendet werden soll, kann die Reihe 12 bzw. 13 von Magnetfeldsonden jeweils der Ausdehnung dieser Bereiche angepaßt werden. Die Sonden können durch die Wahl entsprechender Abstände vom Prüfkörper in ihrer Anordnung der jeweiligen Reihe 12, 13 leicht an die Oberflächenkontur angepaßt werden. Durch die Anpassung der Reihen 12, 13 an die Oberflächenkontur kann der hohe Aufwand für eine sehr genaue Führung der Prüfkörper eingespart werden. Das jeweilige Segment kann auch so klein gewählt werden, daß es in der Größe Handjochmagneten entspricht. Es kann dann mit Handjochmagneten zusammen betrieben werden. Damit lassen sich Werkstücke beliebiger Form und Größe segmentweise prüfen.

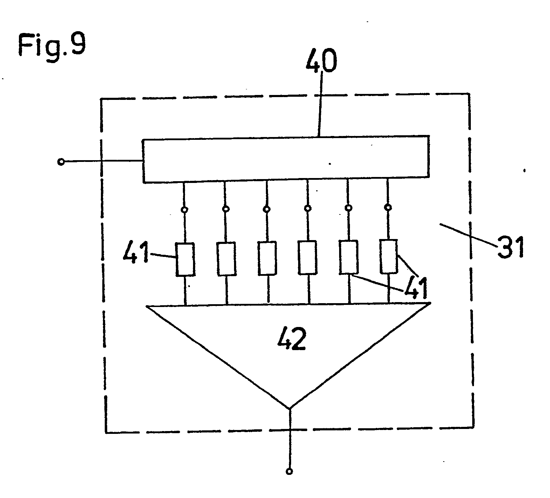

Infolge unterschiedlicher Abstände der in den Reihen 12, 13 angeordneten Hallgeneratoren 14 bzw. 15 zu den Magnetpolschuhen 4, 5 bzw. 7, 8 sind die erzeugten Hallspannungen verschieden. In Fig. 8 ist der Verlauf der Hallspannungen $U_H$ von in einer Reihe angeordneten Hallgeneratoren in Abhängigkeit von der Winkellage $\alpha$ dargestellt. Der Mitte zwischen zwei Magnetpolen 4, 5 bzw. 7, 8 wurde dabei der Winkel 0° zugeordnet. An den mit 45° bezeichneten Stellen befinden sich die oberen Ränder der Magnetpolschuhe 4, 5 bzw. 7, 8. In der Nähe dieser Magnetpolschuhe treten größere Hallspannungen $U_H$ auf als an der 0°-Stelle. Die Hallspannungen $U_H$ zeigen einen parabelförmigen Verlauf. Die mit 11 bezeichnete Kurve ist vorhanden, wenn die Längsachse 10 der Röhre 1 zentrisch zu den Längsachsen der Magnetpaare 4, 5; 7, 8 verläuft. Für außermittig verschobene Rohre hat die Hallspannung $U_H$ einen anderen Verlauf. Die Kurve 1 ergibt sich in einer Stellung, in der das Rohr 1 mit seiner Längsachse 10 aus der in Fig. 1 und 2 gezeigten Lage nach rechts verschoben ist. Die Kurve 111 der Hallspannung $U_H$ tritt bei einer Verschiebung des Rohres 1 in eine links von der gezeigten Position liegenden Stellung auf.

Dieser Lageeinfluß auf die Hallspannungen $U_H$ der Hallgeneratoren muß zur Erzielung einer hohen Meßgenauigkeit beseitigt werden. Der Prozessor 33 enthält einen nicht dargestellten Speicher, in dem Korrekturwerte für die verschiedenen Positionen der Hallgeneratoren 14 bzw. 15 enthalten sind. Die Korrekturwerte beziehen sich sowohl auf die zentrische Anordnung des Rohres 1 als auch auf außermittige Positionen. Die Stellung der Rohre 1 wird zum Beispiel vor Beginn der Messung auf Gefügefehler durch die Aufnahme einer Hallspannungskurve festgestellt, wie sie in Fig. 8 dargestellt ist. Diese Hallspannungskurve liefert für die Position des jeweiligen Hallgenerators 14 bzw. 15 einen Kompensationswert, der abgespeichert wird. Vor Abtastung des entsprechenden Hallgenerators wird der zugehörige Kompensationswert in das Register 30 eingegeben. Die dem Kompensationsverstärker 28 zugeführten Hallspannungen werden dann mit den Kompensationswerten aus dem Register 30 korrigiert.

Die aufeinanderfolgende Abfrage der Hallgeneratoren 14 bzw. 15 mit kontaktlosen Schaltelementen ermöglicht eine ausreichend große Fehlerauflösung auch bei hohen Geschwindigkeiten des Rohres 1 in Längsrichtung 10. Sollten Verschiebegeschwindigkeiten gewünscht werden, bei denen die serielle Abfrage mit schnellen Schaltkreisen nicht ausreicht, dann können auch Hallgeneratoren 14 bzw. 15 gleichzeitig abgefragt werden. Es ist hierzu lediglich eine Erhöhung des schaltungstechnischen Aufwands erforderlich. Beispielsweise werden mehrere Multiplexer und Kompensationsverstärker nebst Registern für die Kompensationsgrößen

## 0 073 017

benötigt.

Die Hallgeneratoren 14 bzw. 15 sitzen vorzugsweise in einem Trägerblock aus einem Nichteisenmetall, wobei die Hallgeneratoren so dicht nebeneinander angeordnet sind, daß zwischen ihnen keine tote Zone entstehen kann.

Günstige Abstände der Hallgeneratoren 14 bzw. 15 von der Oberfläche des Rohres 1 liegen im Bereich von 1 mm bis 1,5 mm.

Bei einer Vorrichtung mit derartig angeordneten Hallgeneratoren hat sich bei der Prüfung einer ferromagnetischen Röhre von 65 mm Durchmesser und 5 mm Wanddicke das in folgender Tabelle angegebene Signal-zu-Rauschverhältnis in Abhängigkeit von der Fehlertiefe und der Fehlerlage ergeben:

| Fehlertiefe | Fehlerlage | Signal-zu-Rauschverhältnis |
|---|---|---|
| 5 % | innen | 6 dB |
| 10 % | innen | 10 dB |
| 5 % | außen | 8 dB |
| 10 % | außen | 17 dB |

Diese Ergebnisse wurden unabhängig von der Winkellage der Hallgeneratoren erhalten. Die Meßwerte wurden am Ausgang des Suchfilters 31 abgegriffen.

Mit der vorstehend erläuterten Vorrichtung lassen sich Risse, die quer zur Längsrichtung des Rohrs 1 verlaufen, nicht erfassen. Da Fehler immer eine räumliche Ausdehnung haben und die Hallgeneratoren kleine Abmessungen aufweisen, können solche Fehler noch über ihre Streuflüsse erkannt werden. Es ist jedoch möglich, die oben beschriebene Vorrichtung so auszugestalten, daß auch Fehler mit reiner Querausdehnung mit hoher Genauigkeit festgestellt werden können. Hierzu wird das Rohr auch in seiner Längsrichtung magnetisiert. Die Längsmagnetisierung kann durch zwei zu einem Magnetsystem gehörige ringförmige Magnetpolschuhe 35, 36 hervorgerufen werden, die jeweils senkrecht die äußere Oberfläche des Rohres 1 umgreifen. Die Magnetpolschuhe 35, 36 sind im Abstand voneinander an verschiedenen Stellen der Rohroberfläche vorgesehen. Die Erzeugung einer Längsmagnetisierung mit den Magnetpolschuhen 35, 38 behindert die Verschiebung des Rohres 1 in Längsrichtung nicht. Um die Gradienten der in Längsrichtung und in Querrichtung verlaufenden Magnetfelder bei Fehlern im Rohr 1 zu erfassen, sind die Hallgeneratoren 14 bzw. 15 in den Reihen 12, 13 mit ihren Plättchen gedreht angeordnet. Die Längsrichtungen dieser nicht näher bezeichneten Plättchen sind dabei gegen die Mittelachsen 6, 9 der Magnetfelder geneigt. Das Ausmaß der Neigung der Plättchen in Bezug auf diese Mittelachsen 6, 9 bzw. die Längsachse 10 hängt von den Feldstärken in Längs- und Querrichtung des Rohres 1 ab. Die Polschuhe 35, 36 sind vorzugsweise Teil eines Elektromagneten, durch den ein magnetisches Wechselfeld von geringer Frequenz erzeugt wird. Damit wird im Rohr 1 ein Magnetfeld hervorgerufen, dessen Feldstärkevektoren periodisch um eine Hauptachse schwanken. Die resultierende Feldstärke wird so hoch eingestellt, daß eine optimale Anzeige bei Fehlern auftritt.

Neben jeder Reihe 12, 13 von Hallgeneratoren 14 bzw. 15 kann auch in Achsrichtung des Rohres 1 gesehen, eine zweite Reihe 37, 38 von Hallgeneratoren angeordnet sein. Die Längsachsen bzw. deren Verlängerungen der Plättchen der Hallgeneratoren in den nebeneinanderliegenden Reihen 12, 37 bzw. 13, 38 stehen dabei senkrecht aufeinander. Mit den Hallgeneratoren in den verschiedenen Reihen 12, 13, 37, 38 lassen sich die senkrecht zueinander verlaufenden Feldstärkegradienten erfassen. Aus den beiden Gradienten kann die Richtung der Ausdehnung eines Fehlers festgestellt werden.

Die Fig. 9 zeigt den Aufbau des Suchfilters 31. Dem Eingang des Suchfilters ist eine Verzögerungsleitung 40 mit Anzapfungen nachgeschaltet, die nicht näher bezeichnet ist. An die Anzapfungen sind Widerstände 41 angeschlossen, die in Anpassung an die Form der Eingangssignale unterschiedlich gewichtet sind. Mit den Widerständen 41 ist eine Summierschaltung 42 verbunden, die das Ausgangssignal erzeugt. Als Verzögerungsleitung für ein solches Suchfilter kann zum Beispiel die Type Data Delay 2214-2000 G verwendet werden.

6

# 0 073 017

## Patentansprüche

1. Vorrichtung zur zerstörungsfreien Prüfung langgestreckter, längs ihrer Achse (10) verschiebbarer, ferromagnetischer Körper (1) auf Gefügestörungen mit
- einem ersten Paar (2, 3) von Magnetpolschuhen (4, 5; 7, 8), dessen Polschuhe in Bezug zur Körperlängsachse (10) symmetrisch angeordnet sind und das der Erzeugung eines ersten senkrecht zur Körperlängsachse gerichteten Magnetfeldes dient,
- mehreren Reihen (12, 13) von an oder nahe an der Körperoberfläche angeordneten Magnetfelddetektoren (14, 15), die von Gefügestörungen bedingte Änderungen des Magnetfeldverlaufs erfassen und
- einer Auswerteschaltung (24-28, 30-34),
dadurch gekennzeichnet, daß
- die Richtung des ersten Magnetfeldes mit einer vorgegebenen Querachse des Körpers (1) zusammenfällt,
- mindestens ein zweites Paar (2, 3) von Magnetpolschuhen (4, 5; 7, 8) im Abstand von dem ersten Paar und ebenfalls symmetrisch bezüglich der Körperlängsachse (10) vorgesehen ist, das ein zweites Magnetfeld erzeugt, dessen Richtung mit der Richtung des ersten Magnetfeldes einen Winkel einschließt, der dem Quotienten aus einhundertachtzig Grad und der Zahl der Magnetfelder entspricht,
- pro Paar (2, 3) von Magnetpolschuhen (4, 5; 7, 8) mindestens eine Reihe (12, 13) von Magnetfelddetektoren (14, 15) vorgesehen ist, die zwischen den Magnetpolschuhen des jeweils zugehörigen Paares längs des Magnetfeldes dieses Paares in einer Zone ortsfest angeordnet sind, die einem zu prüfenden Körperabschnitt senkrecht zur Verschieberichtung des Körpers (1) entspricht, und
- in der Auswerteschaltung (24-28, 30-34) ein Multiplexer (27) vorgesehen ist, der die Signale von den Magnetfelddetektoren (14, 15) über Verstärker (24, 25) erhält und die zeitliche Reihenfolge der Auswertung dieser Signale festlegt.

2. Vorrichtung nach Anspruch 1,
dadurch gekennzeichnet,
daß die Reihen (12, 13) symmetrisch zu der Mittelachse (6, 9) jedes Magnetfelds angeordnet sind und daß jede Reihe (12, 13) sich über eine Zone erstreckt, die einen Winkel ($\beta$) von mindestens einhundertundachtzig Grad dividiert durch die Anzahl der Magnetpole der Magnetfelderzeuger (4, 5; 7, 8) einschließt.

3. Vorrichtung nach Anspruch 1 oder 2,
dadurch gekennzeichnet,
daß die Magnetfelddetektoren (14, 15) Hallgeneratoren (22, 23) sind, denen Steuerströme als Impulsfolgen zuführbar sind, mit denen eine zeitmultiplexe Abfrage der Hallgeneratoren sychronisiert ist.

4. Vorrichtung nach einem der Ansprüche 1 bis 3,
dadurch gekennzeichnet,
daß das Verhältnis von Impulsdauer der Steuerströme zu Impulspause der Steuerströme etwa eins zu zehn ist.

5. Vorrichtung nach Anspruch 3 oder 4,
dadurch gekennzeichnet,
daß die Hallgeneratoren (14, 15, 22, 23) in den Reihen (12, 13) mit ihren Breitseiten (16) auf die Oberfläche des Körpers (1) ausgerichtet sind.

6. Vorrichtung nach Anspruch 3 oder 4,
dadurch gekennzeichnet,
daß die Hallgeneratoren (14, 15, 22, 23) in den Reihen (12, 13) mit ihren Breitseiten (19) jeweils senkrecht zum gegenüberliegenden Oberflächenelement des Körpers (1) ausgerichtet sind.

7. Vorrichtung nach Anspruch 5 oder 6,
dadurch gekennzeichnet,
daß in den jeweiligen Reihen (12, 13) mindestens zwei Lagen (18, 17; 21, 20) von Hallgeneratoren (14, 15, 22, 23) übereinander angeordnet sind.

8. Vorrichtung nach einem der Ansprüche 3 bis 7,
dadurch gekennzeichnet,
daß die Ausgänge von jeweils zwei übereinander angeordneten Hallgeneratoren (22, 23) mit einem Kompensationsverstärker (28) verbunden sind, der in einer entsprechenden Schaltung eine Differenzbildung ermöglicht.

9. Vorrichtung nach einem der Ansprüche 3 bis 8,
dadurch gekennzeichnet,
daß die Ausgangssignale der Hallgeneratoren (22, 23) an einen Kompensationsverstärker (28) anlegbar sind, dem über gesonderte Eingänge (29) Kompensationsgrößen zuführbar sind, durch die störende die Meßgenauigkeit vermindernde Signalanteile in den Hallspannungen der Hallgeneratoren reduzierbar sind.

10. Vorrichtung nach einem der Ansprüche 3 bis,
dadurch gekennzeichnet,
daß dem Kompensationsverstärker (28) ein Suchfilter (31) nachgeschaltet ist.

11. Vorrichtung nach einem der Ansprüche 1 bis 10,
dadurch gekennzeichnet,
daß die Auswerteschaltung einen an einen Bus (32) angeschlossenen Prozessor (33) aufweist, der an eine Triggerschaltung (34) angeschlossen ist, mit deren Ausgangssignalen die Steuerströme eines die Hallgeneratoren (22, 23) speisenden Konstantstromgenerators (24) synchronisierbar sind und daß mit dem Bus (32) die Steuereingänge eines zwischen den Hallgeneratorausgängen und dem Kompensationsverstärker (28) angeordneten Multiplexers (27) und Eingänge von Registern (30) verbunden sind, deren Ausgänge an die Eingänge (29) des Kompensationsverstärkers (28) gelegt sind.

12. Vorrichtung nach einem der Ansprüche 3 bis 11,
dadurch gekennzeichnet
daß die Hallgeneratoren (14, 15) in den Reihen (12, 13) in einem Block aus Nichteisenmetall angeordnet sind.

13. Vorrichtung nach einem der Ansprüche 3 bis 12,
dadurch gekennzeichnet,
daß die Hallgeneratoren (14, 15) in Abständen von 1 Millimeter bis 1,5 Millimeter von der Oberfläche des Körpers (1) angeordnet sind.

14. Vorrichtung nach einem der Ansprüche 1 bis 13,
dadurch gekennzeichnet,
daß der Körper (1) in Achsrichtung von einem zusätzlichen Magnetfeld beaufschlagt ist und daß die Längsachsen der Hallgeneratoren (14, 15) in den Reihen (12, 13) gegen die Mittelachsen (6, 9) verdreht angeordnet sind.

15. Vorrichtung nach einem der Ansprüche 1 bis 13,
dadurch gekennzeichnet,
daß der Körper (1) in Achsrichtung von einem zusätzlichen Magnetfeld beaufschlagt wird und daß mindestens zwei Reihen (12, 37; 13, 38) von Hallgeneratoren nebeneinander angeordnet sind, wobei die Längsachsen der Plättchen der Hallgeneratoren (14, 15) in den nebeneinanderliegenden Reihen jeweils einen Winkel von 90° miteinander einschließen und wobei die Ausgänge benachbarter Hallgeneratoren (14, 15) in den Reihen (12, 37; 13, 38) jeweils in einer Differenzschaltung miteinander verbunden sind.

16. Vorrichtung nach Anspruch 14 oder 15,
dadurch gekennzeichnet,
daß das zusätzliche Magnetfeld von zwei den Körper (1) jeweils umgreifenden Magnetpolschuhen (35, 38) erzeugt wird, die in Längsrichtung des Körpers (1) im Abstand voneinander angebracht sind und daß die Reihen (12, 37; 13, 38) der Hallgeneratoren (14, 15) zwischen den Magnetpolschuhen (35, 36) angeordnet sind.

17. Vorrichtung nach einem der Ansprüche 14 bis 16,
dadurch gekennzeichnet,
daß das zusätzliche Magnetfeld ein magnetisches Wechselfeld ist, das eine niedrige Frequenz hat.


## Claims

1. An apparatus for non-destructively testing for structural irregularities in a ferromagnetic body (1) being longitudinally displaceable and being movable along its longitudinal axis (10) comprising
- a first pair of magnets (2, 3) of magnetic pole shoes (4, 5; 7, 8) being arranged symmetrically with respect to said axis (10), for generating a first stationary magnetic field perpendicularly to said axis,
- a plurality of rows (12, 13) of stationary magnetic field detectors (14, 15), positioned close to the surface of said body, for detecting differences of said first magnetic field caused by structural irregularities and
- evaluation means (24-24, 30-34),
characterized in
- the direction of said first magnetic field is coinciding with a given transverse axis of said body (1),
- at least a second pair of magnets (2, 3) of magnetic pole shoes (4,5; 7,8) being spaced apart from said first pair and being arranged symmetrically with respect to said longitudinal axis (10), for generating a second magnetic field, the directions of the said first magnetic field and said second magnetic field being inclined with respect to one another at an angle, which is equal to 180° divided by the numbers of the total number of magnetic fields,
- each pair (2, 3) of magnetic pole shoes (4, 5; 7, 8) having at least one row (12, 13) of magnetic field detectors (14, 15), said magnetic field detectors extending between the magnetic pole shoes of the corresponding pair of magnetic pole shoes and being arranged over a zone corresponding to a section of said body in a stationary manner and perpendicular to the displacing direction of said body, and
- said evaluation means (24-28 30-34) having a multiplexer (27), said multiplexer receiving signals of said detectors (14, 15) from amplifiers (24, 25) and adjusting the time sequence of the evaluation of said signals.

2. Apparatus according to claim 1,
characterized in
that the rows (12, 13) are arranged symmetrically to the center axis (6, 9) of each magnetic field, and that each row (12, 13) is extending over a zone including an angle (β) of at least one hundred and eighty degrees divided by the number of the magnet poles of the magnetic field generators (4, 5; 7, 8).

3. Apparatus according to Claim 1 or Claim 2,
characterized thereby that the magnetic field detectors (14, 15) are Hall generators (22, 23), to which control currents can be fed as pulse sequences, with which a timemultiplex readout of the Hall generators is being synchronized.

4. Apparatus according to one of the Claims 1 to 3,

# 0 073 017

characterized thereby that the ratio of pulse width of the control currents to pulse interval of the control currents is approximately one to ten.

5. Apparatus according to Claims 3 or 4,
characterized thereby that the Hall generators (14, 15, 22, 23) in the rows (12, 13), with their broadsides (18) are aligned to the surface of the body (1).

6. Apparatus according to Claims 3 or 4,
characterized thereby that the Hall generators (14, 15, 22, 23) in the rows (12, 13), with their broadsides (19), are aligned each time perpendicularly to the opposite surface section of the body (1).

7. Apparatus according to Claims 5 or 6,
characterized thereby that in the respective rows (12, 13) there are arranged at least two layers (18, 17; 21, 20) of Hall generators (14, 15, 22, 23) one on top of the other.

8. Apparatus according to one of the Claims 3 to 7,
characterized thereby that the outputs of two Hall generators (22, 23) each time, being arranged one on top of the other, are connected with a differentiating circuit (28).

9. Apparatus according to one of the Claims 3 to 8,
characterized thereby that the output signals of the Hall generators (22, 23) can be connected to a compensation amplifier (28), which via separate inputs (29) can be fed with compensation values for those signal portions in the Hall voltages of the Hall generators (22, 23) reducing the measuring accuracy.

10. Apparatus according to one of the Claims 3 to 9,
characterized thereby that a tracing filter (31) is subsequently connected to the compensation amplifier (28).

11. Apparatus according to one of the Claims 1 to 10,
characterized thereby that the evalution circuit has a processor (33) connected to a bus (32), which processor is connected to a trigger circuit (34), with the output signals of which the control currents of a constant current generator feeding the Hall generators (22, 23) can be synchronized, and that connected to the bus (32) are the tracing filter (31) and the control inputs of a multiplexer (27) arranged between the outputs of the Hall generators and the compensation amplifier (28), as well as inputs of registers (30), of which the outputs are connected to the inputs (29) of the compensation amplifier (28).

12. Apparatus according to one of the Claims 3 to 11,
characterized thereby that the Hall generators (14, 15) are arranged at distances of 1 mm to 1,5 mm from the surface of the body (1).

14. Apparatus according to one of the Claims 3 to 13,
characterized thereby that the body (1), in axial direction, is charged by an additional magnetic field, and that the longitudinal axes of the Hall generators (14, 15) in the rows (12, 13) are distortedly arranged relative to the center axes (6, 9).

15. Apparatus according to one of the Claims 1 to 13,
characterized thereby that the body (1), in axial direction, is charged by an additional magnetic field, and that at least two rows (12, 37; 13, 38) of Hall generators are arranged side by side, where the longitudinal axes of the little plates of the Hall generators (14, 15) in the adjacent rows each time are defining with each other an angle of 90°, and where the outputs of adjacent Hall generators (14, 15) in the rows (12, 37; 13, 38) each time are connected with each other in a differentiating circuit.

16. Apparatus according to Claims 14 or 15,
characterized thereby that the additional magnetic field is generated by two magnet pole shoes, each being clamped around the body (1), and being mounted in longitudinal direction of the body (1) at a distance from each other; and that the rows (12, 37; 13, 38) of the Hall generators (14, 15) are arranged between the magnet pole shoes (35, 36).

17. Apparatus according to one of the Claims 14 to 16,
characterized thereby that the additional magnetic field is a magnetic a.c. field of low frequency.

## Revendications

1.- Dispositif pour le contrôle non destructif de défauts de structure sur des corps ferromagnétiques longiformes (1) susceptibles d'être déplacés le long de leurs axes (10), dispositif comportant :
- une première paire (2, 3) de pièces polaires magnétiques (4, 5; 7, 8) dont les pièces polaires sont disposées symétriquement par rapport à l'axe longitudinal (10) du corps, cette première paire servant à produire un premier champ magnétique orienté perpendiculairement par rapport à l'axe longitudinal du corps,
- plusieurs rangées (12, 13) de détecteurs de champs magnétiques (14, 15) disposées contre la surface du corps ou à proximité de celle-ci, et qui détectent les modifications de l'évolution du champ magnétique provoquées par les défauts de structures,
- un circuit d'exploitation (24 à 28, 30 à 34) dispositif caractérisé en ce que :
- la direction du premier champ magnétique coïncide avec un axe transversal prédéfini du corps (1),
- au moins une deuxième paire (2, 3) de pièces polaires magnétiques (4, 5; 7, 8) est prévue à une certaine distance de la première paire et également de façon symétrique par rapport à l'axe longitudinal (10) du corps, cette deuxième paire produisant un second champ magnétique dont la direction délimite avec la direction du premier champ magnétique un angle qui correspond au quotient de 180° par le nombre des champs magnétiques

- il est prévu par paire (2, 3) de pièces polaires magnétiques (4, 5; 7, 8) au moins une rangée (12, 13) de détecteurs de champs magnétiques (14, 15), ces rangées étant disposées à poste fixe entre les pièces polaires magnétiques de la paire respectivement associée le long du champ magnétique de cette paire dans une zone qui correspond à une partie du corps à contrôler perpendiculaire à la direction de déplacement de ce corps (1),

- il est prévu dans le circuit d'exploitation (24 à 28, 30 à 34) un multiplexeur (27) qui reçoit par l'intermédiaire d'amplificateurs (24, 25) les signaux en provenance des détecteurs de champs magnétiques (14, 15) et qui détermine la succession dans le temps de l'exploitation de ces signaux.

2.- Dispositif selon la revendication 1, caractérisé en ce que les rangées (12, 13) sont disposées symétriquement par rapport à l'axe médian (6, 9) de chaque champ magnétique et que chaque rangée (12, 13) s'étend sur une zone qui délimite un angle ( β ) d'au moins 180° divisé par le nombre de pôles magnétiques du générateur du champ magnétique (4, 5; 7, 8).

3.- Dispositif selon la revendication 1 ou 2, caractérisé en ce que les détecteurs de champs magnétiques (14, 15) sont des générateurs de Hall (22, 23) dont les courants de commande sont amenés sous la forme de successions d'impulsions grâce auxquelles une interrogation multiplexée dans le temps des générateurs de Hall est synchronisée.

4.- Dispositif selon une des revendications 1 à 3, caractérisé en ce que le rapport des durées d'impulsions des courants de commande aux intervalles entre impulsions des courants de commande, est à peu près de 1 à 10.

5.- Dispositif selon la revendication 3 ou 4, caractérisé en ce que les générateurs de Hall (14, 15, 22, 23) dans les rangées (12, 13) sont alignés par leur côté large (-16) sur la surface du corps (1).

6.- Dispositif selon la revendication 3 ou 4, caractérisé en ce que les générateurs de Hall (14, 15, 22, 23) dans les rangées (12, 13) sont alignés par leur côté large (19) respectivement perpendiculairement par rapport à l'élément de surface opposé du corps (1).

7.- Dispositif selon la revendication 5 ou 6, caractérisé en ce que dans les différentes rangées (12, 13) au moins deux couches (18, 17; 21, 20) de générateurs de Hall (14, 15, 22, 23), sont disposées l'une au-dessus de l'autre.

8.- Dispositif selon une des revendications 3 à 7, caractérisé en ce que les sorties de respectivement deux générateurs de Hall ( 22, 23) disposés l'un au-dessus de l'autre, sont reliées par un amplificateur de compensation (28) qui, selon un branchement approprié, permet la formation d'une différence.

9.- Dispositif selon une des revendications 3 à 8, caractérisé en ce que les signaux de sortie des générateurs de Hall (22, 23) sont susceptibles d'être appliqués à un amplificateur de compensation (28), auquel peuvent être amenées par l'intermédiaire d'entrées séparées (29) des grandeurs de compensation, grâce auxquelles les parties de signaux perturbatrices réduisant la précision de la mesure dans les tensions de Hall des générateurs de Hall sont susceptibles d'être réduites.

10.- Dispositif selon une des revendications 3 à 9, caractérisé en ce qu'un filtre d'exploration (31) est branché à la suite de l'amplificateur de compensation (28).

11.- Dispositif selon une des revendications 1 à 10, caractérisé en ce que le circuit d'exploitation comporte un processeur (33) raccordé à une liaison (32), ce processeur étant raccordé à un circuit de déclenchement, dont les signaux de sortie permettent de synchroniser les courants de commande d'un générateur de courant constant (24) alimentant les générateurs de Hall (22, 23), tandis qu'avec la liaison (32) les entrées de commande d'un multiplexeur (27) disposé entre les sorties des générateurs de Hall et l'amplificateur de compensation (28) sont reliées aux entrées de registres (30) dont les sorties sont reliées aux entrées (29) de l'amplificateur de compensation (28).

12.- Dispositif selon une des revendications 3 à 11, caractérisé en ce que les générateurs de Hall (14, 15) dans les rangées (12, 13) sont disposés dans un bloc d'un métal non ferreux.

13.- Dispositif selon une des revendications 3 à 12, caractérisé en ce que les générateurs de Hall (14, 15) sont disposés à des distances de 1 à 1,5 mm de la surface du corps (1).

14.- Dispositif selon une des revendications 1 à 13, caractérisé en ce que le corps (1) est sollicité en direction axiale par un champ magnétique supplémentaire et que les axes longitudinaux des générateurs de Hall (14, 15) dans les rangées (12, 13) sont disposés de façon décalés en rotation par rapport aux axes médians (6, 9).

15.- Dispositif selon une des revendications 1 à 13, caractérisé en ce que le corps (1) est sollicité en direction axiale par un champ magnétique supplémentaire et qu'au moins deux rangées (12, 37; 13, 38) de générateurs de Hall sont disposées l'une à côté de l'autre, les axes longitudinaux des plaquettes des générateurs de Hall (14, 15) dans ces rangées contiguës délimitant respectivement un angle de 90° entre eux, et les sorties des générateurs de Hall voisins (14, 15) dans les rangées (12, 37; 13, 38) étant reliées entre elles selon un branchement différentiel.

16.- Dispositif selon la revendication 14 ou 15, caractérisé en ce que le champ magnétique supplémentaire est engendré par deux pièces polaires magnétiques (35, 36) embrassant respectivement le corps (1), ces pièces polaires étant rapportées à une certaine distance l'une de l'autre en direction longitudinale du corps (1), tandis que les rangées (12, 37; 13, 38) des générateurs de Hall (14, 15) sont disposées entre ces pièces polaires (35, 36).

17.- Dispositif selon une des revendications 14 à 16, caractérisé en ce que le champ magnétique supplémentaire est un champ magnétique alternatif qui a une fréquence basse.

Fig:1

0 073 017

Fig:2

Fig:3

Fig:4

Fig:5

Fig:6

Fig:8

Fig: 7

Fig. 9